# EUROPEAN PATENT APPLICATION

(11) **EP 3 859 826 A1**
(43) Date of publication of application: **04.08.2021**
(21) Application number: 19865220.8
(22) Date of filing: 20.09.2019
(51) Int. Cl.: H01M 4/131, H01M 4/136, H01M 4/36, H01M 4/505, H01M 4/525, H01M 4/58, H01M 4/62

(54) **ELECTRODE FOR SECONDARY BATTERIES AND LITHIUM ION SECONDARY BATTERY**

(30) Priority: 25.09.2018 JP 2018178707
(71) Applicant: Toray Industries, Inc., Tokyo, 103-8666 (JP)
(72) Inventor: TAMAKI, Eiichiro, Otsu-shi, Shiga 520-8558 (JP); KAWAMURA, Hiroaki, Otsu-shi, Shiga 520-8558 (JP); KONISHI, Takashi, Otsu-shi, Shiga 520-8558 (JP); SUGAYA, Hiroyuki, Otsu-shi, Shiga 520-8558 (JP)
(74) Representative: Mewburn Ellis LLP
(86) International application number: PCT/JP2019/037013
(87) International publication number: WO 2020/066909

(57) **Abstract**

An object of the present invention is to provide an electrode which can achieve both safety and a high energy density at high levels, and is used in a secondary battery such as a lithium ion secondary battery. The present invention is an electrode for secondary batteries including a positive electrode mixture layer containing, as positive electrode active materials, at least an olivine-based positive electrode active material and a layered oxide-based positive electrode active material, wherein: a total weight fraction of the positive electrode active materials in the positive electrode mixture layer is 80% by weight or more and 99% by weight or less; a weight fraction of the olivine-based positive electrode active material is 10% by weight or more and 65% by weight or less; a weight fraction of the layered oxide-based positive electrode active material is 30% by weight or more and 80% by weight or less; and the positive electrode mixture layer contains graphene.

## Description

### TECHNICAL FIELD

The present invention relates to an electrode for secondary batteries such as a lithium ion battery, and a lithium ion secondary battery.

### BACKGROUND ART

Lithium ion batteries are used in various applications such as mobile device applications including smartphones, mobile phones, and laptop computers, automobile applications including hybrid automobiles and electric automobiles, and storage applications for storing renewable energy such as solar cells and wind power.

The lithium ion batteries applied in these applications are strongly required to have an improved energy density per volume. For example, mobile devices are required to be able to be used for a long time while maintaining a compact shape, and are required to achieve a long cruising range of several hundred kilometers with a limited battery storage space even in automobile applications.

Meanwhile, examples of an important issue in the lithium ion batteries include safety. A flammable electrolytic solution and a positive electrode active material which can serve as an oxygen source coexist in general lithium ion batteries. This causes a high temperature when a short circuit or overcharge occurs, which may cause the reaction of the flammable electrolytic solution, resulting in explosion or firing or the like. Usually, as the energy density is higher, the risk tends to be higher. A technique for maintaining safety and increasing the energy density is required.

One of important techniques for increasing the energy density per volume is improvement in an active material. Currently, lithium manganate and layered oxide-based active materials (lithium cobaltate and ternary active material Li (NiₓCo_{y}Mn_{1-x-y}) O₂ and the like) are used as a positive electrode active material. In particular, for a higher capacity, among the ternary active materials, the application ratio of an active material having a high nickel ratio increases. Thus, studies have been made to improve the capacity of the positive electrode active material, but in general, as the energy density of the active material is higher, the material tends to be more unstable. In particular, the use of a ternary active material having a high nickel ratio causes a high temperature when a short circuit occurs, which tends to be apt to cause explosion or firing or the like.

In recent years, olivine-based positive electrode active materials such as lithium iron phosphate and lithium manganese phosphate have been attracting attention as highly safe positive electrode active materials (for example, Patent Document 1). When the lithium manganate and the layered oxide-based active materials are subjected to a high temperature by short-circuiting, oxygen is released from a crystal structure, and reacts with a flammable electrolytic solution, which may lead to explosion, firing or the like. However, since an oxygen atom exists as phosphoric acid in the olivine-based positive electrode active material, oxygen is not released even at a high temperature,
whereby the olivine-based positive electrode active material is a very safe active material.

However, the olivine-based positive electrode active material has a problem that it has a low energy density per volume. Therefore, attempts have been made to achieve both a high energy density and safety with the olivine-based positive electrode active material mixed with a positive electrode active material having a higher energy density. For example, Patent Document 2 discloses a technique for using a ternary active material mixed with an olivine-based positive electrode active material.

### PRIOR ART DOCUMENTS

### PATENT DOCUMENTS

Patent Document 1: Japanese Patent No. 4043853
Patent Document 2: Japanese Patent No. 5574239

### SUMMARY OF THE INVENTION

### PROBLEMS TO BE SOLVED BY THE INVENTION

In Patent Document 2, the layered oxide-based positive electrode active material and the olivine-based positive electrode active material are simply mixed and used. However, since the layered oxide-based positive electrode active material has higher conductivity than that of the olivine-based positive electrode active material, the layered oxide-based positive electrode active material preferentially reacts and generates heat when a short circuit occurs, which causes the thermal decomposition of the layered oxide-based positive electrode active material. Therefore, the effect of improving safety by the technique of Patent Document 2 is limited.

An object of the present invention is to provide an electrode which can achieve both safety and a high energy density at high levels, and is used in a secondary battery such as a lithium ion secondary battery.

### SOLUTIONS TO THE PROBLEMS

The present invention for solving the above problems is an electrode for secondary batteries including a positive electrode mixture layer containing, as positive electrode active materials, at least an olivine-based positive electrode active material and a layered oxide-based positive electrode active material, wherein: a total weight fraction of the positive electrode active materials in the positive electrode mixture layer is 80% by weight or more and 99% by weight or less; a weight fraction of the olivine-based positive electrode active material is 10% by weight or more and 65% by weight or less; a weight fraction of the layered oxide-based positive electrode active material is 30% by weight or more and 80% by weight or less; and the positive electrode mixture layer contains graphene.

### EFFECTS OF THE INVENTION

According to the present invention, the graphene forms a conductive network in a positive electrode mixture, whereby high conductivity can be provided between the layered oxide-based positive electrode active material and the olivine-based positive electrode active material. When a short circuit occurs in the absence of the graphene, the layered oxide-based positive electrode active material rapidly undergoes an electrochemical reaction to generate high heat. However, in the presence of the graphene, electron transfer from the layered oxide-based positive electrode active material to the olivine-based positive electrode active material is rapidly performed, whereby the electrochemical reaction of the olivine-based positive electrode active material also occurs at the same time. Since the olivine-based positive electrode active material has stable crystals, and is not decomposed, the rate of heat generation is slowed down, whereby explosion, firing or the like due to the short circuit is less likely to occur.

### EMBODIMENTS OF THE INVENTION

An electrode for secondary batteries of the present invention includes a positive electrode mixture layer containing, as positive electrode active materials, at least an olivine-based positive electrode active material and a layered oxide-based positive electrode active material.

The olivine-based positive electrode active material is a compound represented by a composition formula LiMPO₄ (M is a metal element selected from the group consisting of manganese, iron, vanadium, nickel, and cobalt). Among these, lithium iron phosphate (LiFePO₄), lithium manganese phosphate (LiMnPO₄), or LiMnₓFe₁₋ₓPO₄ containing manganese and iron, or the like is preferable. As the content rate of manganese is higher, an energy density is higher, but as the content rate of manganese is higher, the conductivity of the active material is lower, whereby the ratio of manganese contained in the metal element M has a preferable range. The molar ratio of a manganese element in M of the olivine-based positive electrode active material LiMPO₄ is preferably 0.5 or more and 0.9 or less, and more preferably 0.6 or more and 0.85 or less.

In order to improve the efficiency during charge and discharge, it is preferable that the crystallite size of the olivine-based positive electrode active material is small. However, if the crystallite size is too small, the influence of the surface becomes too large, which causes a collapsed crystal structure. Therefore, the crystallite size of the olivine-based positive electrode active material is preferably 10 nm or more and 100 nm or less, more preferably 20 nm or more and 80 nm or less, and still more preferably 25 nm or more and 50 nm or less. The crystallite size of the olivine-based positive electrode active material is measured according to a method described in Measurement Example 1 to be described later.

When the molar ratio of the manganese element in M of the olivine-based positive electrode active material LiMPO₄ is 0.5 or more and 0.9 or less, not crystallinity oriented in a specific direction but uniform crystallinity is preferable because it can reduce crystal lattice distortion during charge and discharge. For that purpose, the intensity ratio I₂₀/I₂₉ of peaks in the vicinity of 20° and 29° measured by X-ray diffraction is preferably 0.88 or more and 1.05 or less. The I₂₀/I₂₉ of the olivine-based positive electrode active material is specifically measured according to Measurement Example 12 to be described later.

The particle size Db of the olivine-based positive electrode active material is preferably smaller than the particle size Da of a layered oxide-based active material to be described later, and is also preferably small from the viewpoint of ionic conductivity during charge and discharge. However, if the particle size is too small, aggregation is apt to occur when an electrode paste is produced, which makes it difficult to produce an electrode. The particle size Db of the olivine-based positive electrode active material is preferably 100 nm or more and 10 µm or less, and more preferably 500 nm or more and 5 µm or less. Herein, the particle size of the positive electrode active material is a particle size observed by SEM, and in the case of a granulated body, the particle size represents not a primary particle size but a secondary particle size. Specifically, the particle size of the positive electrode active material is measured according to Measurement Example 3 to be described later.

In the present invention, the weight fraction of the olivine-based positive electrode active material in the positive electrode mixture layer is 10% by weight or more and 65% by weight or less. Since the crystal structure of the olivine-based positive electrode active material is stable and a phosphoric acid structure is particularly less likely to be decomposed, oxygen is not released when the battery is short-circuited, which is less likely to cause a high temperature. Therefore, a higher usage ratio of the olivine-based positive electrode active material provides higher safety. Meanwhile, since the capacity of the olivine-based positive electrode active material is smaller than that of the layered oxide-based active material, the overall battery capacity becomes small if the usage ratio is too high. From the viewpoint of maintaining a balance between safety and a battery capacity, the weight fraction of the olivine-based positive electrode active material in the positive electrode mixture layer needs to be within the above range, and the range is more preferably 20% by weight or more and 50% by weight or less, and still more preferably 25% by weight or more and 40% by weight or less.

The weight ratio of the positive electrode active material in a positive electrode mixture can be measured by dissolving a binder in a solvent such as N-methylpyrrolidone (NMP) to remove it, then dissolving the positive electrode active material in an acid, and measuring weights before and after dissolving. The volume ratio of each active material in the positive electrode active material can be obtained from the composition of each active material and the cross-sectional area by cross-sectional SEM-EDX. After obtaining the volume ratio, the weight ratio can be obtained from the density of each active material. The above method makes it possible to obtain the weight ratio of the olivine-based positive electrode active material.

The layered oxide-based positive electrode active material is a positive electrode active material represented by a composition formula LiXO₂ (X is a metal selected from transition metal elements, and may be a plurality of metals). Among these, nickel, cobalt, manganese, or aluminum is often used as X. Examples of the layered oxide-based positive electrode active material include lithium cobaltate (LiCoO₂), lithium nickelate (LiNiO₂), a ternary system in which nickel is partially substituted with manganese and cobalt (LiNiₓMn_{y}Co_{1-x-y}O₂), a ternary system in which nickel is partially substituted with cobalt and aluminum (LiNiₓCo_{y}Al_{1-x-y}O₂), and the like.

In the present invention, the weight fraction of the layered oxide-based positive electrode active material in the positive electrode mixture layer is 30% by weight or more and 80% by weight or less. The layered oxide-based positive electrode active material has a high capacity, but it has a property of releasing oxygen when a short circuit occurs, so that the oxygen rapidly reacts with an organic substance such as an electrolytic solution, which causes a high temperature. This may lead to explosion or firing. In order to obtain a highly safe positive electrode, the ratio of the layered oxide-based positive electrode active material is preferably lower, but in order to increase the capacity, the ratio of the layered oxide-based positive electrode active material is preferably higher. From the viewpoint of maintaining a balance between safety and a battery capacity, the weight fraction of the layered oxide-based positive electrode active material in the positive electrode mixture layer needs to be within the above range, and the range is more preferably 40% or more and 75% or less, and still more preferably 60% or more and 70% or less. The weight ratio of the layered oxide-based positive electrode active material can be measured in the same manner as in the above-described olivine-based active material.

The particle size Da of the layered oxide-based positive electrode active material is preferably 3 µm or more and 20 µm or less, and more preferably 5 µm or more and 15 µm or less. A preferable range of the ratio to the particle size Db of the olivine-based positive electrode active material will be described later.

In order to achieve the concept of the present invention, electron conduction needs to be rapidly performed between the olivine-based positive electrode active material and the layered oxide-based positive electrode active material. Therefore, less active materials other than the olivine-based positive electrode active material and the layered oxide-based positive electrode active material are preferably present. Therefore, in the present invention, the total weight fraction of the olivine-based positive electrode active material and the layered oxide-based positive electrode active material in the positive electrode mixture layer is set to 80% by weight or more and 99% by weight or less. As long as the positive electrode mixture layer contains the olivine-based positive electrode active material and the layered oxide-based positive electrode active material in the weight fraction, a metal oxide-based active material such as lithium manganate (LiMn₂O₄)₂O₅ having a spinel-type structure, a metal compound-based active material such as TiS₂, MoS₂, or NbSe₂, or a solid solution-based active material may be further contained as other active materials.

In order to improve the packing density in the positive electrode mixture, a structure in which the olivine-based positive electrode active material is inserted between the layered oxide-based positive electrode active materials is preferable. Therefore, the ratio (Db/Da) of the particle size Db of the olivine-based positive electrode active material to the particle size Da of the layered oxide-based positive electrode active material is preferably 0.1 or more and 0.5 or less, and more preferably 0.2 or more and 0.4 or less.

When the battery is short-circuited, it is preferable that the olivine-based positive electrode active material undergoes an electrochemical reaction more preferentially than the layered oxide-based positive electrode active material. Therefore, in the positive electrode mixture of the present invention, it is preferable that the voltage of the olivine-based positive electrode active material during discharge is higher than the voltage of the layered oxide-based positive electrode active material during discharge. Herein, the voltage during discharge means a voltage when a lithium ion secondary battery produced with an electrode containing a single positive electrode active material is discharged 30%. Specifically, it is a value measured according to Measurement Example 11 to be described later.

The positive electrode mixture layer of the present invention contains graphene as a conductive auxiliary agent. The graphene has a thin layer shape, has a large number of conductive paths per unit weight, and is likely to form a good conductive network in the electrode. When the graphene is used, the amount of the graphene added can be lower than that of carbon black or the like, and the graphene which is thin and has flexible properties is inserted between the olivine-based positive electrode active material and the layered oxide-based positive electrode active material, whereby the electrode density can be increased.

In a narrow sense, the graphene refers to a sheet of sp²-bonded carbon atoms having a thickness of one atom (single-layer graphene). Herein, a thin section-shaped laminate of single-layer graphene is also referred to as the graphene. Similarly, "graphene oxide" is also a designation including a thin section-shaped laminate. The graphene is contained, which makes it possible to connect the conductive paths between the olivine-based positive electrode active material and the layered oxide-based positive electrode active material, whereby mutual electron conduction can be assisted when a short circuit occurs. Therefore, when only the layered oxide-based positive electrode active material undergoes an electrochemical reaction, heat is rapidly generated, but the olivine-based positive active material which is less likely to generate heat also undergoes an electrochemical reaction at the same time due to the presence of the graphene. As a whole, the generation of the heat is suppressed, which provides a low temperature when a short circuit occurs.

The thickness of the graphene used in the present invention is not particularly limited, but it is preferably 100 nm or less, more preferably 50 nm or less, and still more preferably 20 nm or less. As the thickness of the graphene, a value obtained as follows is used. First, graphene is diluted to 0.002% by weight with NMP, dropped onto a glass substrate, and dried. The graphene on the substrate is observed with a laser microscope capable of measuring a three-dimensional shape, and the thickness of each graphene is measured. When the thickness is varied in each graphene, the area average of the thicknesses is obtained. Thus, the thicknesses of 50 randomly selected graphenes are calculated, and the average value thereof is taken as the thickness of the graphene.

In the present invention, the size of the graphene in a plane direction is preferably greater than an average distance between the olivine-based positive electrode active material and the layered oxide-based positive electrode active material. The average distance between the olivine-based positive electrode active material and the layered oxide-based positive electrode active material can be measured by observing the cross section of the positive electrode mixture layer cut with an ion milling device with a scanning electron microscope equipped with an X-ray element analyzer, and is specifically measured by a method described in Measurement Example 2 to be described later. The size of the graphene in the plane direction is greater than a distance between the olivine-based positive electrode active material and the layered oxide-based positive electrode active material, whereby electron conduction is rapidly performed between the olivine-based positive electrode active material and the layered oxide-based positive electrode active material when the battery is short-circuited. Thereby, the electrochemical reaction of the layered oxide-based positive electrode active material which vigorously react is alleviated, which suppresses the temperature rise when a short circuit occurs. Therefore, the preferable size of the graphene in the plane direction varies depending on the arrangement of the olivine-based positive electrode active material and the layered oxide-based positive electrode active material in the positive electrode mixture.

A distance between the positive electrode active materials in the positive electrode of the lithium ion battery is often in the range of 1 to 2 µm. From this viewpoint, the size of the graphene in the plane direction is preferably 1 µm or more, and more preferably 2 µm or more. If the size of the graphene in the plane direction is too large, the aggregation of the graphene is caused in the electrode, so that the upper limit of the size is preferably 30 µm or less, and more preferably 10 µm or less. The size of the graphene in the plane direction as used herein refers to the average of the longest diameter and the shortest diameter of the graphene surface, and specifically means an average value measured according to Measurement Example 4 to be described later.

The graphene preferably contains nitrogen atom-containing molecules as a surface treatment agent. The nitrogen atom-containing molecules have a high affinity for N-methylpyrrolidone which is widely used when a battery is produced, whereby the nitrogen atom-containing molecules are preferably used for the dispersion of the graphene. The nitrogen atom-containing molecules should have high adsorptivity to the graphene surface, whereby the nitrogen atom-containing molecules preferably contain an aromatic ring. Examples of the nitrogen atom-containing compound include a pyrazolone-based compound, a tertiary amine, a secondary amine, and a primary amine, and more specific examples thereof include antipyrine, aminopyrine, 4-aminoantipyrine, 1-phenyl-3-methyl-5-pyrazolone, 4-benzoyl-3-methyl-1-phenyl-2-pyrazolin-5-one, 1-(2-chlorophenyl)-3-methyl-2-pyrazoline-5-one, 5-oxo-1-phenyl-2-pyrazoline-3-carboxylic acid, 1-(2-chloro-5-sulfophenyl)-3-methyl-5-pyrazolone, 1-(4-chlorophenyl)-3-methyl-2-pyrazolin-5-one, 1-(4-sulfophenyl)-3-methyl-5-pyrazolone, 3-chloroaniline, benzylamine, 2-phenylethylamine, 1-naphthylamine, dopamine hydrochloride, dopamine, dopa, and the like.

The graphene used in the present invention preferably has a specific surface area of 80 m²/g or more and 400 m²/g or less, more preferably 100 m²/g or more and 300 m²/g or less, and still more preferably 130 m²/g or more and 200 m²/g or less, as measured by a BET measurement method. The specific surface area of the graphene reflects the thickness of the graphene and the degree of peeling of the graphene. The larger the specific surface area of the graphene is, the thinner the graphene is, and the higher the degree of peeling is. If the specific surface area of the graphene is small, that is, the degree of peeling is low, it becomes difficult to form a conductive network of the electrode. If the specific surface area of the graphene is large, that is, the degree of peeling is high, the graphene is apt to be aggregated to have low dispersibility, and becomes difficult to handle. The BET measurement method is performed according to a method described in JIS Z 8830: 2013. A method for measuring an adsorption gas amount is performed by a carrier gas method, and the analysis of adsorption data is performed by a single point method. Specifically, the adsorption gas amount can be measured according to Measurement Example 6 to be described later.

The graphene used in the present invention preferably has an element ratio of oxygen to carbon (O/C ratio) of 0.06 or more and 0.30 or less as measured by X-ray photoelectron spectroscopy. A too small amount of oxygen atoms on the graphene surface causes deteriorated dispersibility. Conversely, too many oxygen atoms mean a state where the graphene cannot be sufficiently reduced, and a π-electron conjugated structure is not restored, which causes deteriorated conductivity. The oxygen atoms on the graphene surface are derived from an oxygen atom-containing functional group having high polarity such as a hydroxy group (-OH), a carboxyl group (-COOH), an ester bond (-C(=O)-O-), an ether bond (-C-O-C-), a carbonyl group (-C(=O)-), and an epoxy group. A surface treatment agent may be added to the graphene. In such a case, not only the oxygen atoms derived from the functional group of the graphene itself but also the oxygen atoms derived from the functional group of the surface treatment agent are included in the "oxygen atoms on the graphene surface". That is, in the graphene to which the surface treatment agent is applied, the O/C ratio of the surface after the treatment with the surface treatment agent is preferably within the above range. The O/C ratio of the graphene is more preferably 0.08 or more and 0.20 or less, and still more preferably 0.10 or more and 0.15 or less.

In the X-ray photoelectron spectroscopy, the surface of a sample placed in an ultra-high vacuum is irradiated with soft X-rays, and photoelectrons emitted from the surface are detected with an analyzer. The photoelectrons are measured by wide scan, and the value of binding energy of bound electrons in the substance is obtained to obtain elemental information on the substance surface. Furthermore, the element ratio can be quantified with the peak area ratio. Specifically, the O/C ratio is measured according to Measurement Example 5 to be described later.

The O/C ratio can be controlled, for example, by changing the degree of oxidation of graphene oxide as a raw material or by changing the amount of the surface treatment agent in the case where a chemical peeling method is used. The higher the degree of oxidation of the graphene oxide is, the larger the amount of oxygen remaining after the reduction is, and the lower the degree of oxidation is, the smaller the amount of oxygen after the reduction is. As the adhesion amount of the surface treatment agent having an acidic group is larger, the amount of oxygen can be increased.

The method for producing graphene used in the present invention is not limited, and may be a direct peeling method from graphite, or a method for oxidizing graphite to form graphene oxide, peeling the graphene oxide to form graphene oxide, and further reducing the graphene oxide to produce graphene. The latter method is preferable in that the size of the graphene is likely to be controlled and graphene having a high specific surface area is likely to be produced. The method for producing graphene oxide is not particularly limited, and a known method such as the Hummers method can be used. Commercially available graphene oxide may be used.

In the electrode of the present invention, the weight fraction of the graphene in the positive electrode mixture layer is preferably 0.1% by weight or more and 2.0% by weight or less. As the amount of the conductive auxiliary agent added increases, the filling of the positive electrode active materials with each other is hindered, so that the electrode density of the positive electrode mixture layer decreases, which causes a decreased energy density of the battery. The graphene has a layer shape thinner than that of a carbon-based material such as carbon black or carbon nanotube, which makes it easy to obtain conductive paths in the positive electrode mixture layer. Therefore, even a small amount of the graphene can sufficiently function as the conductive auxiliary agent, which makes it possible to improve the electrode density of the positive electrode mixture layer. The weight fraction of the graphene in the positive electrode mixture layer is more preferably 1.5% by weight or less, and still more preferably 1% by weight or less. Meanwhile, if the content of the graphene is too small, the conductivity of the positive electrode mixture layer is deteriorated, which causes deteriorated battery performance. Therefore, the weight fraction of the graphene is more preferably 0.2% by weight or more, still more preferably 0.3% by weight or more, and particularly preferably 0.5% by weight or more. The electrode density of the positive electrode mixture layer is preferably 2.8 g/cc or more, more preferably 2.9 g/cc or more, and still more preferably 3.0 g/cc or more. The electrode density of the positive electrode mixture layer can be specifically determined according to Measurement Example 7 to be described later.

The positive electrode mixture layer may further contain a binder if necessary in addition to the positive electrode active material and the graphene. Examples of the binder include polysaccharides such as carboxymethyl cellulose, hydroxypropyl cellulose, regenerated cellulose, and diacetyl cellulose, thermoplastic resins such as polyvinyl chloride, polyvinyl pyrrolidone, polyvinyl alcohol, polyethylene, and polypropylene, fluoropolymers such as polytetrafluoroethylene (PTFE) and polyvinylidene fluoride (PVDF), polymers having rubber elasticity such as ethylene propylene diene monomer (EPDM), sulfonated EPDM, styrene butadiene rubber, butadiene rubber, and fluororubber, polyimide precursors and/or polyimide resins, polyamideimide resins, polyamide resins, polyacrylic acids, sodium polyacrylate, acrylic resins, polyacrylonitrile, and polyethers such as polyethylene oxide. In particular, polyvinylidene fluoride (PVDF) is preferable.

The positive electrode mixture layer may further contain a conductive auxiliary agent other than graphene, if necessary. The conductive auxiliary agent other than graphene preferably has a three-dimensional shape because it is necessary to improve the conductivity of the entire electrode and maintain the conductivity. As the conductive auxiliary agent, powders and fibers of carbon materials such as graphite, carbon fibers, carbon black, acetylene black, and VGCF (registered trademark), metal materials such as copper, nickel, aluminum, and silver, and mixtures thereof may be used.

The electrode for secondary batteries of the present invention can be typically produced by mixing the above positive electrode active material, graphene, and binder if necessary in a solvent to prepare a positive electrode paste, applying the obtained positive electrode paste to a current collector, and then drying the positive electrode paste. The method for mixing these materials is not limited, and a device capable of applying a shear force is preferable. For example, devices such as a planetary mixer, FILMIX (registered trademark) (PRIMIX Corporation), a rotation-revolution mixer, and a wet planetary ball mill can be used.

As the current collector, a metal foil or a metal mesh is preferably used. In particular, an aluminum foil is preferably used.

### Examples

### <Measurement Examples>

### [Measurement Example 1: Crystalline Size of Olivine-Based Positive Electrode Active Material]

The crystallite size of an olivine-based positive electrode active material was measured with D8 ADVANCE manufactured by Bruker ASX. Measurement conditions of 2θ = 5° to 70°, a scan interval of 0.02°, and a scan speed of 20 seconds/deg were adopted. The crystallite size of the olivine-based positive electrode active material can be obtained from the Scherrer equation D = K × λ (β × cosθ) (where D is the crystallite size of the olivine-based positive electrode active material; K is the Scherrer constant; β is a peak half width; and θ is a diffraction angle.). Here, K was set to 0.9. A reference peak was a peak near 20 ° based on the (101) plane of the olivine-based positive electrode active material.

### [Measurement Example 2: Average Distance Xb between Layered Oxide-Based Positive Electrode Active Material and Olivine-Based Positive Electrode Active Material]

### The cross section of a positive electrode mixture

The cross section of a positive electrode mixture layer cut with an ion milling device was observed with an SEM (Hitachi, Ltd., S-5500, X-ray analyzer, EDAX Company) equipped with an X-ray element analyzer. Twenty layered oxide-based positive electrode active materials were randomly selected. For each layered oxide positive electrode active material, five olivine-based positive electrode active materials were selected in order from the material closest to the layered oxide positive electrode active material. An average Xa of five distances between the layered oxide positive electrode active material and the olivine-based positive electrode active material was measured. An average distance Xb was calculated as the average of the twenty Xa.

### [Measurement Example 3: Particle Size of Positive Electrode Active Material]

The positive electrode active material particles are observed by SEM. The largest diameter (major axis, µm) and the smallest diameter (minor axis, µm) observed by SEM were measured for 50 randomly selected particles. Fifty values obtained by (major axis + minor axis)/2 were averaged, and the average was taken as the particle size (D, µm) of the positive electrode active material.

### [Measurement Example 4: Size of Graphene in Plane Direction]

A graphene dispersion liquid or graphene powder was diluted to 0.002% by mass with an NMP solvent, dropped onto a glass substrate, and dried to allow it to adhere onto the substrate. The graphene on the substrate was observed by a VK-X250 laser microscope manufactured by Keyence Corporation. The largest diameter (major axis, µm) and the smallest diameter (minor axis, µm) of each graphene fragment were measured for 50 randomly selected graphene fragments. Fifty values obtained by (major axis + minor axis)/2 were averaged, and the average was taken as the size in the plane direction of graphene (µm).

### [Measurement Example 5: O/C Ratio of Graphene]

Measurement of X-ray photoelectron of graphene was carried out with Quantera SXM (manufactured by PHI). An excited X-ray was monochromatic Al Kα1 and Kα2 lines (1486.6 eV). A diameter of X-ray was set to 200 µm, and a photoelectron escape angle was set to 45°.

### [Measurement Example 6: Specific Surface Area of Graphene]

The specific surface area of graphene was measured with an automatic surface area analyzer HM Model-1210 (manufactured by Macsorb). The measurement principle was the BET fluid process (single point method), and the degassing conditions of 100°C × 180 minutes were adopted.

### [Measurement Example 7: Electrode Density of Positive Electrode Mixture Layer]

The electrode density of a positive electrode mixture layer was obtained as follows. A mass of an electrode plate obtained by punching each of positive electrode plates produced in Examples and Comparative Examples with a punch having a diameter of 15.9 mm was measured. The mass of the positive electrode mixture layer obtained by subtracting the mass of a current collector from the value was divided by the volume of the positive electrode mixture layer obtained by multiplying the thickness of the positive electrode mixture layer obtained by subtracting the thickness of the current collector from the average of five thicknesses of the electrode by the area of the positive electrode mixture layer, to obtain the electrode density of the positive electrode mixture layer. A micrometer (MDH-25MB 293-100-10 manufactured by Mitutoyo Co., Ltd.) was used to measure the thickness.

### [Measurement Example 8: Maximum Temperature during Nail Sticking]

To 97 parts by weight of graphite (manufactured by Ito Graphite Co., Ltd., model number: SG-BH8, particle size: 8 µm), 1 part by weight of an aqueous 1% solution of carboxymethyl cellulose in terms of solid content, and 1 part by weight of styrene butadiene rubber (manufactured by JSR Corporation, model number: TRD2001), ion exchanged water was added so that a total solid content concentration was 50%, followed by mixing at 30 RPM for 30 minutes with a planetary mixer to obtain a paste. This paste was applied at 7.7 mg/cm² to a copper foil (thickness: 10 µm) with a doctor blade, dried at 80°C for 30 minutes, pressed with a roll press machine (manufactured by Thank-Metal Co., Ltd.) at a linear pressure of 8 kN/cm, and vacuum-dried at 80°C for 5 hours with a glass tube oven to produce a negative electrode plate.

A positive electrode plate produced in each of Examples and Comparative Examples, the negative electrode plate, a separator (celgard #2400 manufactured by Celgard, LLC.), and an electrolytic solution (ethylene carbonate:diethyl carbonate = 3:7 (volume ratio)) containing 1 M of LiPF₆ were used to produce a stacked laminate cell as a 3 Ah cell. The number of the positive electrodes (size: 70 mm × 40 mm) to be stacked was 21, and the number of the negative electrodes (size: 74 mm × 44 mm) was 22. The capacitance ratio (NP ratio) between the positive electrode and the negative electrode facing each other was 1.05.

The produced cell was charged and discharged three times at 0.1 C, then charged again at 0.1 C, and subjected to a nail sticking test. The nail sticking test was performed by causing an iron nail (diameter: 3 mm) to penetrate through the center part of a fully charged battery at a speed of 1 mm/sec. A thermocouple was attached at a location 10 mm away from a place where the nail penetrated, to measure a maximum temperature during nail sticking.

### [Measurement Example 9: Discharge Capacity]

A 2032 type coin cell was produced with each of positive electrode plates produced in Examples and Comparative Examples and punched with a punch having a diameter of 15.9 mm as a working electrode, a lithium foil cut into a diameter of 16.1 mm and a thickness of 0.2 mm as a counter electrode, Celgard #2400 (manufactured by Celgard, LLC.) cut into a diameter of 17 mm as a separator, and a solvent (ethylene carbonate:diethyl carbonate = 7:3) containing 1 M of LiPF₆ as an electrolytic solution. The discharge capacity of the 2032 type coin cell was measured by a charge-discharge tester (TOSCAT-3100 manufactured by Toyo System Co., Ltd.).

In the charge/discharge measurement, the charge voltage was 4.3 V; the discharge voltage was 3.0 V; constant current charge was performed at 1 C up to the charge voltage; and constant voltage charge was then performed at the charge voltage. The end current of the constant voltage charge was 0.01 C. Charge and discharge were performed five times at a discharge rate of 1 C. The fifth discharge capacity value was taken as the discharge capacity.

### [Measurement Example 10: Measurement of Capacity Retention Rate]

Each of positive electrode plates produced in Examples and Comparative Examples was punched with a punch having a diameter of 15.9 mm to produce a positive electrode. A negative electrode was produced by punching a negative electrode plate produced in the same manner as in Measurement Example 8 with a punch having a diameter of 16.1 mm. A 2032 type coin cell was produced with Celgard #2400 (manufactured by Celgard, LLC.) cut into a diameter of 17 mm as a separator, and a solvent (ethylene carbonate:diethyl carbonate = 7:3) containing 1 M of LiPF₆ as an electrolytic solution. Charge/discharge measurement was performed with a charge-discharge tester (TOSCAT-3100 manufactured by Toyo System Co., Ltd.).

In the charge/discharge measurement, the charge voltage was 4.3 V; the discharge voltage was 3.0 V; constant current charge was performed at 1 C up to the charge voltage; and constant voltage charge was then performed at the charge voltage. The end current of the constant voltage charge was 0.01 C. Charge and discharge were performed 300 times at a discharge rate of 1 C, and a ratio of the 300th discharge capacity value to the first discharge capacity value was obtained.

### [Measurement Example 11: Discharge Voltage of Positive Electrode Alone during 30% Discharge]

Each of LiNi_{0.85}CO_{0.1}Al_{0.05}O₂ (NCA), LiNi₀.₅Co_{0.2}Mn_{0.3}O₂ (NCM523), LiFe_{0.3}Mn_{0.7}PO₄, and LiFePO₄ which were the positive electrode active materials used in Examples was measured for the discharge voltage of the positive electrode alone during 30% discharge.

NCA (particle size: 10 µm) NCM523 (manufactured by UMICORE, particle size: 12 µm) as commercially available particles was used. For LiFe_{0.3}Mn_{0.7}PO₄, a granulated body of Synthesis Example 2 to be described later was used. For LiFePO₄, a granulated body of Synthesis Example 5 to be described later was used. 100 parts by weight of a positive electrode, 3 parts by weight of acetylene black, 3 parts by weight of polyvinylidene fluoride #7200 (manufactured by Kureha Corporation), and 80 parts by weight of NMP were mixed at 15 RPM for 30 minutes with a planetary mixer to obtain an electrode paste. This electrode paste was applied to an aluminum foil (thickness: 18 µm) with a doctor blade, dried at 80°C for 30 minutes, pressed with a roll press machine (manufactured by Thank-Metal Co., Ltd.) at a linear pressure of 15 kN/cm, and vacuum-dried at 120°C for 5 hours to obtain an electrode plate. A 2032 type coin cell was produced with the electrode plate punched with a punch having a diameter of 15.9 mm as a working electrode, a lithium foil cut into a diameter of 16.1 mm and a thickness of 0.2 mm as a counter electrode, Celgard #2400 (manufactured by Celgard, LLC.) cut into a diameter of 17 mm as a separator, and a solvent (ethylene carbonate:diethyl carbonate = 7:3) containing 1 M of LiPF₆ as an electrolytic solution. Charge-discharge measurement was performed with a charge-discharge tester (TOSCAT-3100 manufactured by Toyo System Co., Ltd.).

In the charge/discharge measurement, the charge voltage was 4.3 V; the discharge voltage was 3.0 V; charge voltage; and constant voltage charge was then performed at the charge voltage. The end current of the constant voltage charge was 0.01 C. The discharge rate was measured at 0.1 C, and the voltage of the positive electrode alone during 30% discharge was obtained from the measured discharge curve.

The voltage of the positive electrode alone during 30% discharge was 3.95 V for NCA, 3.92 V for NCM523, 4.05 V for LiFe_{0.3}Mn_{0.7}PO₄, and 3.38 V for LiFePO₄.

### [Measurement Example 12: Measurement of Intensity Peak Ratio I₂₀/I₂₉ by X-Ray Diffraction]

The powder X-ray diffraction pattern of the olivine-based positive electrode active material was measured with D8 ADVANCE manufactured by Bruker ASX. Measurement conditions of 2θ = 5° to 70°, a scan interval of 0.02°, and a scan speed of 20 seconds/deg were adopted. With analyzing software for powder X-ray diffraction EVA manufactured by Bruker ASX., the background removal (coefficient: 1.77) was performed; intensities of 20° and 29° peaks were read; and a value obtained by dividing the intensity of the 20° peak by the intensity of the 29° peak was taken as an intensity peak ratio I₂₀/I₂₉.

### <Synthesis Examples>

### <Synthesis Examples>

### (Synthesis Example 1: Synthesis of LiFe_{0.3}Mn_{0.7}PO₄)

In 16 g of pure water, 60 mmol of lithium hydroxide monohydrate was dissolved, and 104 g of diethylene glycol was then added thereto to produce an aqueous lithium hydroxide/diethylene glycol solution. To the obtained aqueous lithium hydroxide/diethylene glycol solution stirred at 2000 rpm with a homodisper (homodisper Model 2.5 manufactured by PRIMIX Corporation), an aqueous solution obtained by dissolving 20 mmol of phosphoric acid (an aqueous 85% solution), 14 mmol of manganese sulfate monohydrate, and 6 mmol of iron nitrate (III) nonahydrate in 10 g of pure water was added to obtain a LiFe_{0.3}Mn_{0.7}PO₄ particle precursor. The obtained precursor solution was heated to 110°C and held at the temperature for 2 hours to obtain LiFe_{0.3}Mn_{0.7}PO₄ particles as a solid content. To the obtained nanoparticles, pure water was added, and solvent removal with a centrifugal separator was repeated to wash the nanoparticles. The synthesis was repeated until the weight of LiFe_{0.3}Mn_{0.7}PO₄ particles obtained after being washed became 10 g.

### (Synthesis Example 2: Production 1 of Granulated Body of LiFe_{0.3}Mn_{0.7}PO₄)

To 10 g of the lithium manganese phosphate nanoparticles obtained in Synthesis Example 1, 2. 5 g of glucose and 40 g of pure water were added, followed by mixing, and with a spray drying apparatus (ADL-311-A manufactured by Yamato Scientific Co., Ltd.), the nanoparticles were granulated under the conditions of a nozzle diameter of 400 µm, a drying temperature of 150°C and an atomizing pressure of 0.2 MPa. The obtained granulated body was subjected to firing in a firing furnace at 700°C for 5 hours under a nitrogen atmosphere to obtain a carbon-coated lithium manganese phosphate nanoparticle granulated body. A crystallite size measured based on Measurement Example 1 was 42 m. A particle size measured based on Measurement Example 3 was 3.2 µm. I₂₀/I₂₉ measured based on Measurement Example 12 was 0.92.

### (Synthesis Example 3: Production 2 of Granulated Body of LiFe_{0.3}Mn_{0.7}PO₄)

A carbon-coated LiFe_{0.3}Mn_{0.7}PO₄ particle granulated body was obtained in the same manner as in Synthesis Example 2 except that a firing step was performed at 900°C for 5 hours under a nitrogen atmosphere. A crystallite size measured based on Measurement Example 1 was 70 nm. A particle size measured according to Measurement Example 3 was 3.0 µm. I₂₀/I₂₉ measured based on Measurement Example 12 was 0.93.

### (Synthesis Example 4: Synthesis of LiFePO₄)

Such an aqueous solution that the molar ratio of lithium chloride, iron(II) chloride and phosphoric acid was 1:1:1 and the aqueous solution concentration was 0.1 mol/kg was produced. To the aqueous solution, glucose was added at a concentration of 0.4% by mass. The aqueous solution was spray-dried with nitrogen as a carrier gas and fired at 700°C under an inert atmosphere to obtain LiFePO₄ particles. A crystallite size measured based on Measurement Example 1 was 120 nm. A particle size measured according to Measurement Example 3 was 0.7 µm.

### (Synthesis Example 5: Granulated Body of LiFePO₄)

Such an aqueous solution that the molar ratio of lithium chloride, iron(II) chloride and phosphoric acid was 1:1:1 and the aqueous solution concentration was 0.1 mol/kg was produced. The aqueous solution was spray-dried with nitrogen as a carrier gas and dried at 700°C under an inert atmosphere to obtain LiFePO₄ particles. To 10 g of the obtained LiFePO₄ particles, 2.5 g of glucose and 40 g of pure water were added, followed by mixing, and with a spray drying apparatus (ADL-311-A manufactured by Yamato Scientific Co., Ltd.), the particles were granulated under the conditions of a nozzle diameter of 400 µm, a drying temperature of 150°C and an atomizing pressure of 0.25 MPa. The obtained granulated body was subjected to firing in a firing furnace at 700°C for 1 hour under a nitrogen atmosphere to obtain a carbon-coated lithium manganese phosphate nanoparticle granulated body. A crystallite size measured based on Measurement Example 1 was 140 nm. A particle size measured based on Measurement Example 3 was 3.5 µm.

### (Synthesis Example 6: Synthesis of Graphene Oxide)

With 1500 mesh natural graphite powder (Shanghai Yifan Graphite Co., Ltd.) as a raw material, 220 ml of 98% concentrated sulfuric acid, 5 g of sodium nitrate, and 30 g of potassium permanganate were charged into 10 g of the natural graphite powder in an ice bath. The mixture was mechanically stirred for 1 hour, and the temperature of the liquid mixture was kept at 20°C or lower. The liquid mixture was taken out from the ice bath, and reacted with stirring in a water bath at 35°C for 4 hours. Then, 500 ml of ion exchanged water was added to the liquid mixture, and the obtained suspension was reacted at 90°C for another 15 minutes. Finally, 600 ml of ion exchanged water and 50 ml of hydrogen peroxide were charged into the suspension, and the mixture was reacted for 5 minutes to obtain a graphene oxide dispersion liquid. This was filtered, and metal ions were washed with a dilute hydrochloric acid solution. The acid was washed with ion exchanged water. The washing was repeated until the pH reached 7 to prepare a graphene oxide gel.

### (Synthesis Example 7: Synthesis of Graphene)

The graphene oxide gel prepared in Synthesis Example 6 was diluted to a concentration of 30 mg/ml with ion exchanged water, and treated with an ultrasonic washer for 30 minutes to obtain a uniform graphene oxide dispersion liquid.

20 ml of the graphene oxide dispersion liquid was mixed with 0.3 g of dopamine hydrochloride as a surface treatment agent, and the mixture was treated with a homodisper model 2.5 (PRIMIX Corporation) at a rotation speed of 3000 rpm for 60 minutes.

Ultrasonic waves were applied to the graphene oxide dispersion liquid at an output of 300 W for 40 minutes with an ultrasonic device UP400S (manufactured by hielscher).

After the ultrasonic treatment, the graphene oxide dispersion liquid was diluted to 5 mg/ml with ion exchanged water, and 0.3 g of sodium dithionite was added to 20 ml of the diluted dispersion liquid. The mixture was subjected to a reduction reaction at 40°C for 1 hour. Then, a washing step of filtering the resulting product with a vacuum suction filter, diluting the filtrate to 0.5% by mass with ion exchanged water, and subjecting the diluted liquid to suction filtration was repeated five times for washing.

After washing, the resulting liquid was diluted to 0.5% by mass with NMP, and treated with FILMIX (registered trademark) model 30-30 (PRIMIX Corporation) at a rotation speed of 40 m/s (shear rate: 20,000/sec) for 60 seconds for suction filtration. After the filtration, the liquid was diluted to 0.5% by mass with NMP, and a step of subjecting the liquid to suction filtration with a homodisper model 2.5 (PRIMIX Corporation) at a rotation speed of 3000 rpm for 30 minutes was repeated twice to obtain a graphene NMP dispersion liquid.

A size in a plane direction measured based on Measurement Example 4 was 3 µm. An O/C ratio measured based on Measurement Example 5 after the NMP dispersion liquid was dried was 0.12.

A part of reduced graphene washed with water before the addition of the NMP was taken out, and freeze-dried. A specific surface area of the reduced graphene measured according to Measurement Example 6 was 180 m²/g.

### (Synthesis Example 8: Synthesis of Graphene)

The same treatment as that in Synthesis Example 7 was carried out except that ultrasonic waves were applied for 180 minutes in the step of using an ultrasonic device UP400S, to obtain a graphene NMP dispersion liquid.

A size of graphene measured based on Measurement Example 4 was 1 µm. An O/C ratio measured based on Measurement Example 5 after the NMP dispersion liquid was dried was 0.12.

A part of reduced graphene washed with water before the addition of the NMP was taken out, and freeze-dried. A specific surface area of the reduced graphene measured according to Measurement Example 6 was 180 m²/g.

### [Example 1]

To 50 parts by weight of a LiFe_{0.3}Mn_{0.7}PO₄ granulated body produced in Synthesis Example 3 as an olivine-based positive electrode active material, 50 parts by weight of NCM523 (manufactured by UMICORE, particle size: 12 µm) as a layered oxide-based positive electrode active material, 1 part by weight of the graphene dispersion liquid (in terms of solid content) produced in Synthesis Example 7 as a conductive auxiliary agent, and 1 part by weight of a binder (manufactured by Kureha Corporation, model number: #7200), NMP was added so that a total solid content concentration was 50%, followed by mixing at 30 RPM for 30 minutes with a planetary mixer to obtain a paste. This paste was applied to an aluminum foil (thickness: 18 µm) with a doctor blade, dried at 80°C for 30 minutes, pressed with a roll press machine (manufactured by Thank-Metal Co., Ltd.) at a linear pressure of 15 kN/cm, and vacuum-dried at 120°C for 5 hours with a glass tube oven to obtain a positive electrode plate. The coating thickness of the paste was adjusted so that the thickness of a positive electrode mixture layer after pressing was 80 µm. An average distance Xb between the layered oxide-based positive electrode active material and the olivine-based positive electrode active material in the positive electrode mixture layer according to Measurement Example 2 was 2.1 µm. An electrode density of the positive electrode mixture layer measured based on Measurement Example 7 was 3.33 g/cc. A maximum temperature during nail sticking measured based on Measurement Example 8 was 78°C. A discharge capacity measured based on Measurement Example 9 was 4.01 mAh/cm². A volume capacity density of the positive electrode mixture layer obtained from the discharge capacity and the electrode thickness was 0.501 Ah/cc. A capacity retention rate measured based on Measurement Example 10 was 85%.

### [Example 2]

A positive electrode plate was produced in the same manner as in Example 1 except that 50 parts by weight of NCA (manufactured by UMICORE, particle size: 10 µm) was used as a layered oxide-based positive electrode active material instead of NCM523, and subjected to various evaluations.

### [Example 3]

A positive electrode plate was produced in the same manner as in Example 1 except that 50 parts by weight of the LiFe_{0.3}Mn_{0.7}PO₄ granulated body produced in Synthesis Example 2 was used as an olivine-based positive electrode active material instead of the LiFe_{0.3}Mn_{0.7}PO₄ granulated body, and subjected to various evaluations.

### [Example 4]

A positive electrode plate was produced in the same manner as in Example 1 except that 50 parts by weight of the LiFePO₄ granulated body produced in Synthesis Example 5 was used as an olivine-based positive electrode active material instead of the LiFe_{0.3}Mn_{0.7}PO₄ granulated body, and subjected to various evaluations.

### [Example 5]

A positive electrode plate was produced in the same manner as in Example 1 except that the amount of a graphene dispersion liquid added was 0.5 parts by weight in terms of solid content, and subjected to various evaluations.

### [Example 6]

A positive electrode plate was produced in the same manner as in Example 1 except that 50 parts by weight of the LiFePO₄ produced in Synthesis Example 4 was used as an olivine-based positive electrode active material instead of the LiFe_{0.3}Mn_{0.7}PO₄ granulated body, and subjected to various evaluations.

### [Example 7]

A positive electrode plate was produced in the same manner as in Example 1 except that the graphene dispersion liquid produced in Synthesis Example 8 was used, and subjected to various evaluations.

### [Example 8]

A positive electrode plate was produced in the same manner as in Example 1 except that the weights of an olivine-based positive electrode active material, a layered oxide-based positive electrode active material, a graphene solid content, and a binder added were respectively 30 parts by weight, 70 parts by weight, 1 part by weight, and 1 part by weight, and subjected to various evaluations.

### [Example 9]

A positive electrode plate was produced in the same manner as in Example 1 except that the weights of an olivine-based positive electrode active material, a layered oxide-based positive electrode active material, a graphene solid content, and a binder added were respectively 20 parts by weight, 80 parts by weight, 1 part by weight, and 1 part by weight, and subjected to various evaluations.

### [Comparative Example 1]

A positive electrode plate was produced in the same manner as in Example 1 except that the weights of an olivine-based positive electrode active material, a layered oxide-based positive electrode active material, a graphene solid content, and a binder added were respectively 5 parts by weight, 95 parts by weight, 1 part by weight, and 1 part by weight, and subjected to various evaluations.

### [Comparative Example 2]

To 50 parts by weight of the LiFe_{0.3}Mn_{0.7}PO₄ granulated body produced in Synthesis Example 3 as an olivine-based positive electrode active material, 50 parts by weight of NCM523 (manufactured by UMICORE, particle size: 12 µm) as a layered oxide-based positive electrode active material, and 3 parts by weight of acetylene black (Li-100 manufactured by Denki Kagaku Kogyo Kabushiki Kaisha) in terms of solid content as a conductive auxiliary agent, and 3 parts by weight of a binder (manufactured by Kureha Corporation, model number: #7200), NMP was added so that a total solid content concentration was 60%, followed by mixing at 30 RPM for 30 minutes with a planetary mixer to obtain an electrode paste. This paste was applied to an aluminum foil (thickness: 18 µm) with a doctor blade, dried at 80°C for 30 minutes, pressed with a roll press machine (manufactured by Thank-Metal Co., Ltd.) at a linear pressure of 15 kN/cm, and vacuum-dried at 120°C for 5 hours with a glass tube oven to obtain a positive electrode plate. The positive electrode plate was subjected to various evaluations in the same manner as in Example 1.

### [Comparative Example 3]

A positive electrode plate was produced in the same manner as in Comparative Example 2 except that the weights of an olivine-based positive electrode active material, a layered oxide-based positive electrode active material, acetylene black, and a binder added were respectively 50 parts by weight, 50 parts by weight, 1 part by weight, and 1 part by weight, and subjected to various evaluations.

### [Comparative Example 4]

A positive electrode plate was produced in the same manner as in Example 1 except that the weights of an olivine-based positive electrode active material, a layered oxide-based positive electrode active material, a graphene solid content, and a binder added were respectively 80 parts by weight, 20 parts by weight, 1 part by weight, and 1 part by weight, and subjected to various evaluations.

### [Comparative Example 5]

A positive electrode plate was produced in the same manner as in Example 4 except that the weights of an olivine-based positive electrode active material, a layered oxide-based positive electrode active material, a graphene solid content, and a binder added were respectively 80 parts by weight, 20 parts by weight, 1 part by weight, and 1 part by weight, and subjected to various evaluations.

Tables 1 and 2 summarize the various evaluation results of the positive electrode plates produced in Examples and Comparative Examples.

**[Table 1]**

| | Olivin-based positive electrode active material | | | | Layered oxide-based positive electrode active material | | | Total weight fraction of positive electrode active materials (% by weight) | Da/Db | Conductive auxiliary agent | | | | |
|---|---|---|---|---|---|---|---|---|---|---|---|---|---|---|
| | Type | Crystal lite size (nm) | Particle size Db (µm) | Weight fraction in positive electrode mixture layer (% by weight) | Type | Particle size Da (µm) | Weight fraction in positive electrode mixture layer (% by weight) | | | Conductive auxiliary agent | Size of graphene in plane direction (µm) | O/C ratio of graphene | Specific surface area of graphene (m²/g) | Weight fraction in positive electrode mixture layer (% by weiaht) |
| Example 1 | Synthesis Example 3 LMFP | 70 | 3.2 | 49.0 | NCM523 | 12 | 49.0 | 98.0 | 0.3 | Synthesis Example 7 Graphene | 3.0 | 0.12 | 180 | 0.98 |
| Example 2 | Synthesis Example 3 LMFP | 70 | 3.2 | 49.0 | NCA | 10 | 49.0 | 98.0 | 0.3 | Synthesis Example 7 Graphene | 3.0 | 0.12 | 180 | 0.98 |
| Example 3 | Synthesis Example 2 LMFP | 42 | 3.0 | 49.0 | NCM523 | 12 | 49.0 | 98.0 | 0.3 | Synthesis Example 7 Graphene | 3.0 | 0.12 | 180 | 0.98 |
| Example 4 | Synthesis Example 5 LFP | 140 | 3.5 | 49.0 | NCM523 | 12 | 49.0 | 98.0 | 0.3 | Synthesis Example 7 Graphene | 3.0 | 0.12 | 180 | 0.98 |
| Example 5 | Synthesis Example 3 LMFP | 70 | 3.2 | 49.3 | NCM523 | 12 | 49.3 | 98.5 | 0.3 | Synthesis Example 7 Graphene | 3.0 | 0.12 | 180 | 0.49 |
| Example 6 | Synthesis Example 4 LFP | 120 | 0.7 | 49.0 | NCM523 | 12 | 49.0 | 98.0 | 0.1 | Synthesis Example 7 Graphene | 3.0 | 0.12 | 180 | 0.98 |
| Example 7 | Synthesis Example 3 LMFP | 70 | 3.2 | 49.0 | NCM523 | 12 | 49.0 | 98.0 | 0.3 | Synthesis Example 8 Graphene | 1.1 | 0.12 | 180 | 0.98 |
| Example 8 | Synthesis Example 3 LMFP | 70 | 3.2 | 29.4 | NCM523 | 12 | 68.6 | 98.0 | 0.3 | Synthesis Example 7 Graphene | 3.0 | 0.12 | 180 | 0.98 |
| Example 9 | Synthesis Example 3 LMFP | 70 | 3.2 | 19.6 | NCM523 | 12 | 78.4 | 98.0 | 0.3 | Synthesis Example 7 Graphene | 3.0 | 0.12 | 180 | 0.98 |
| Comparative Example 1 | Synthesis Example 3 LMFP | 70 | 3.2 | 4.9 | NCM523 | 12 | 93.1 | 98.0 | 0.3 | Synthesis Example 7 Graphene | 3.0 | 0.12 | 180 | 0.98 |
| Comparative Example 2 | Synthesis Example 3 LMFP | 70 | 3.2 | 47.2 | NCM523 | 12 | 47.2 | 94.3 | 0.3 | Acetylene black | - | - | - | - |
| Comparative Example 3 | Synthesis Example 3 LMFP | 70 | 3.2 | 49.0 | NCM523 | 12 | 49.0 | 98.0 | 0.3 | Acetylene black | - | - | - | - |
| Comparative Example 4 | Synthesis Example 3 LMFP | 70 | 3.2 | 78.4 | NCM523 | 12 | 19.6 | 98.0 | 0.3 | Synthesis Example 7 Graphene | 3.0 | 0.12 | 180 | 0.98 |
| Comparative Example 5 | Synthesis Example 5 LFP | 140 | 3.5 | 78.4 | NCM523 | 12 | 19.6 | 98.0 | 0.3 | Synthesis Example 7 Graphene | 3.0 | 0.12 | 180 | 0.98 |

**[Table 2]**

| | Positive electrode mixture layer | | Battery performance | | | | |
|---|---|---|---|---|---|---|---|
| | Average distance Xb between layered oxide-based positive electrode active material and olivine-based positive electrode active material (µm) | Electrode density (g/cc) | Maximum temperature during nail sticking (°C) | Discharge capacity (mAh/cm²) | Electrode thickness (µm) | Volume capacity density of positive electrode mixture layer (Ah/cc) | Capacity retention rate (%) |
| Example 1 | 2.1 | 3.33 | 78 | 4.01 | 80 | 0.501 | 85 |
| Example 2 | 2.2 | 3.25 | 90 | 4.22 | 80 | 0.528 | 82 |
| Example 3 | 2.1 | 3.33 | 59 | 4.04 | 80 | 0.505 | 84 |
| Example 4 | 2.5 | 3.25 | 60 | 4.05 | 80 | 0.506 | 87 |
| Example 5 | 2.1 | 3.43 | 67 | 4.16 | 80 | 0.520 | 79 |
| Example 6 | 1.8 | 3.06 | 63 | 3.93 | 80 | 0.491 | 84 |
| Example 7 | 2.1 | 3.33 | 110 | 4.02 | 80 | 0.503 | 77 |
| Example 8 | 2.1 | 3.30 | 92 | 4.22 | 80 | 0.528 | 81 |
| Example 9 | 2.1 | 3.39 | 113 | 4.28 | 80 | 0.535 | 79 |
| Comparative Example 1 | 2.1 | 3.31 | 252 | 4.32 | 80 | 0.540 | 70 |
| Comparative Example 2 | 2.0 | 2.63 | 139 | 3.70 | 80 | 0.463 | 64 |
| Comparative Example 3 | 2.0 | 3.14 | 76 | 1.21 | 80 | 0.151 | 25 |
| Comparative Example 4 | 3.3 | 2.34 | 52 | 3.18 | 80 | 0.398 | 83 |
| Comparative Example 5 | 2.9 | 2.46 | 45 | 3.26 | 80 | 0.408 | 86 |

## Claims

1. An electrode for secondary batteries comprising a positive electrode mixture layer containing, as positive electrode active materials, at least an olivine-based positive electrode active material and a layered oxide-based positive electrode active material,
wherein:
a total weight fraction of the positive electrode active materials in the positive electrode mixture layer is 80% by weight or more and 99% by weight or less;
a weight fraction of the olivine-based positive electrode active material is 10% by weight or more and 65% by weight or less;
a weight fraction of the layered oxide-based positive electrode active material is 30% by weight or more and 80% by weight or less; and
the positive electrode mixture layer contains graphene.

2. The electrode for secondary batteries according to claim 1, wherein a weight fraction of the graphene in the positive electrode mixture layer is 0.1% by weight or more and 2.0% by weight or less.

3. The electrode for secondary batteries according to claim 1 or 2, wherein an electrode density of the positive electrode mixture layer is 2.8 g/cc or more.

4. The electrode for secondary batteries according to any one of claims 1 to 3, wherein the graphene has a size of 1 µm or more and 30 µm or less in a plane direction.

5. The electrode for secondary batteries according to any one of claims 1 to 4, wherein the size of the graphene in the plane direction is greater than an average distance between the olivine-based positive electrode active material and the layered oxide-based positive electrode active material.

6. The electrode for secondary batteries according to any one of claims 1 to 5, wherein a crystallite size of the olivine-based positive electrode active material is 10 nm or more and 100 nm or less.

7. The electrode for secondary batteries according to any one of claims 1 to 6, wherein a molar ratio of a manganese element in M of LiMPO₄ is 0.5 or more and 0.9 or less in a composition of the olivine-based positive electrode active material.

8. The electrode for secondary batteries according to any one of claims 1 to 7, wherein a voltage of the olivine-based positive electrode active material during discharge is higher than that of the layered oxide-based positive electrode active material during discharge.

9. The electrode for secondary batteries according to any one of claims 1 to 8, wherein a particle size Db of the olivine-based positive electrode active material is smaller than a particle size Da of the layered oxide-based positive electrode active material.

10. The electrode for secondary batteries according to claim 9, wherein a ratio Db/Da of the particle size Db of the olivine-based positive electrode active material to the particle size Da of the layered oxide-based positive electrode active material is 0.1 or more and 0.5 or less.

11. The electrode for secondary batteries according to any one of claims 1 to 10, wherein an element ratio of oxygen to carbon measured by X-ray photoelectron spectroscopy of the graphene is 0.06 or more and 0.30 or less.

12. The electrode for secondary batteries according to any one of claims 1 to 11, wherein the graphene has a specific surface area of 80 m²/g or more and 400 m²/g or less.

13. A lithium ion secondary battery comprising the electrode for secondary batteries according to any one of claims 1 to 12.
